# FASCICULE DE BREVET EUROPEEN

(11) **EP 2 941 560 B1**
(45) Date de publication et mention de la délivrance du brevet: **12.04.2017**
(21) Numéro de dépôt: 13818326.4
(22) Date de dépôt: 17.12.2013
(51) Int. Cl.: F02P 5/15, F02D 41/04, F02D 41/12

(54) **PROCÉDÉ DE GESTION D'UN COUPLE MOTEUR LORS D'UNE DÉCÉLÉRATION AVEC COUPURE D'INJECTION ET VÉHICULE CORRESPONDANT**
DREHMOMENTHANDHABUNGSVERFAHREN BEI DREHZAHLVERMINDERUNG, UND ENTSPRECHENDES FAHRZEUG
TORQUE MANAGEMENT METHOD DURING A DECELERATION WITH FUEL CUT-OFF AND CORRESPONDING VEHICLE

(30) Priorité: 07.01.2013 FR 1350091
(43) Date de publication de la demande: 11.11.2015
(73) Titulaire: Peugeot Citroën Automobiles SA, 78140 Vélizy Villacoublay (FR)
(72) Inventeur: THOMAS, Mathieu, F-78220 Viroflay (FR); CHARLES, Juliette, F-78510 Triel sur Seine (FR)
(86) Numéro de dépôt international: PCT/FR2013/053117
(87) Numéro de publication internationale: WO 2014/106702

(56) Documents cités:
- GB-A- 2 350 909
- US-A1- 2007 026 995
- US-A1- 2010 082 220
- US-A1- 2011 270 509

## Description

L'invention porte sur un procédé de gestion d'un couple moteur lors d'une décélération avec coupure d'injection ainsi que sur le véhicule correspondant.

L'invention s'applique au domaine du contrôle de commande des véhicules équipés d'un Groupe Moto-Propulseur (GMP) thermique à allumage commandé avec une boîte de vitesses de type manuelle (BVM), automatisée (BVA), pilotée (BVMP) ou à double embrayage (DCT).

Un véhicule équipé d'un groupe moto-propulseur thermique à allumage commandé, fonctionnant par exemple à l'essence est de façon connue en soi, par exemple du document US2010082220A1, équipé d'une structure couple permettant d'adapter les points de fonctionnement des organes du véhicule, en particulier du moteur thermique, afin de respecter la volonté du conducteur en termes de couple demandé.

Le couple réalisé par le moteur, pour répondre au couple voulu par le conducteur, dépend d'une quantité de carburant injectée, d'une quantité d'air présente dans la chambre de combustion et du temps d'allumage pour déclencher la combustion. L'avance à l'allumage (AA) se définit comme la différence entre le moment où l'étincelle est déclenchée et celui où le piston atteint son point mort haut. Cette avance à l'allumage peut être quantifiée comme l'angle que forme la bielle par rapport à l'axe du piston, en degrés.

Cette avance à l'allumage est limitée par des contraintes du moteur. Ainsi, lorsque l'avance est trop importante, l'étincelle se produit trop tôt, la propagation du front de flamme est plus lente car la densité du combustible est insuffisante. La combustion n'est pas terminée au moment du passage du point mort haut, de sorte que la partie du combustible non brûlée atteint son seuil auto-inflammation au moment de la compression le long des parois, ce qui provoque le phénomène de cliquetis. Le moteur ne fonctionne alors pas de manière optimale et son accélération est faible. A l'inverse du cliquetis, il est nécessaire de limiter l'avance à l'allumage afin d'éviter les ratés de combustion ainsi que la rupture d'éléments mécaniques comme l'échappement ou le catalyseur. Autrement dit, on limite également l'avance à l'allumage pour garantir l'inflammation du mélange.

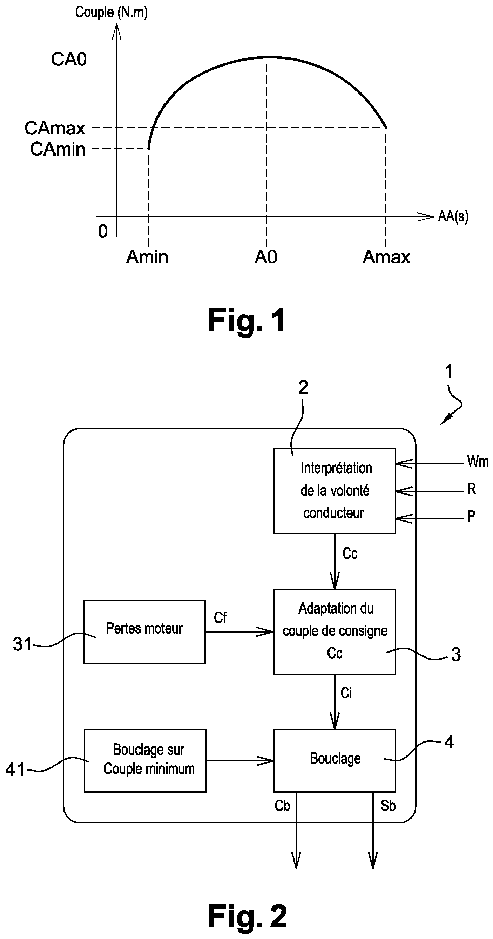

Pour une quantité d'air donnée et pour une quantité de carburant injectée, on retrouve le profil de couple réalisé par le moteur en fonction de l'avance à l'allumage AA montré sur la figure 1. Ainsi à iso consommation (en air et en carburant), le moteur fournira un couple maximal CAO sur son avance optimale AO et des couples CAMax et CAmin inférieurs au couple maximal CAO respectivement sur son avance maximale Amax et son avance minimale Amin.

Dans un mode de fonctionnement bouclé de la structure couple, le moteur fonctionne sur son avance optimale pour maximiser le rendement du moteur. Or, lorsque la structure couple fonctionne dans ce mode au cours d'une décélération du véhicule accompagnée d'une coupure injection, cela génère un mauvais ressenti dans la mesure où lorsque le conducteur appuie de nouveau sur la pédale d'accélération, l'avance à l'allumage courante correspond à l'avance à l'allumage optimale. En conséquence, l'accélération entraîne un saut de couple non désiré car on réalise un couple supérieur au couple souhaité par le conducteur. Il y a donc un choc sur la chaîne de traction voire une accélération du véhicule qui n'était pas voulue par le conducteur.

L'invention vise à remédier efficacement à cet inconvénient en proposant un procédé de gestion d'un couple d'un moteur thermique à allumage commandé par une structure couple, le moteur thermique fonctionnant sur une avance à l'allumage optimale lors d'un suivi d'un couple de consigne dans un mode de fonctionnement bouclé de la structure de couple, il comporte l'étape de passer la structure couple dans un mode de fonctionnement débouclé suite à une détection d'une décélération avec une coupure d'injection du moteur thermique de sorte que des avances à l'allumage calculées pendant une période de coupure d'injection sont comprises entre des avances à l'allumage minimale et maximale de manière que le couple de consigne pourra être suivi lors d'une accélération ultérieure, le procédé comportant en outre l'étape d'effectuer une comparaison entre le couple de consigne et un couple de pertes moteur au moyen d'une fonction hystérésis pour détecter la période de coupure d'injection.

L'invention permet ainsi de produire un faible couple lors de la réaccélération et ainsi de respecter la volonté du conducteur en termes de couple de consigne. Il n'y a plus de consigne de couple inappropriée, donc pas d'à-coup sur la chaîne de traction. Cette fonction n'a pas besoin d'être calibrée, ce qui n'engendre pas de coût de mise au point supplémentaire. En outre, l'injection est coupée de sorte que la demande de débouclage n'entraîne pas de consommation supplémentaire.

Selon une mise en oeuvre, la structure couple détecte un début de la période de coupure d'injection et passe dans le mode de fonctionnement débouclé lorsque la différence entre le couple de consigne et le couple de pertes moteur devient inférieure à une première valeur seuil.

Selon une mise en oeuvre, la structure couple détecte une fin de la période de coupure d'injection et passe dans le mode de fonctionnement bouclé lorsque la différence entre le couple de consigne et le couple de pertes moteur devient supérieure à une deuxième valeur seuil.

Selon une mise en oeuvre, la première et la deuxième valeur seuil valent respectivement 5 N.m et 8 N.m.

Selon une mise en oeuvre, les valeurs seuil de la fonction hystérésis dépendent d'un régime du moteur thermique.

Selon une mise en oeuvre, le procédé comporte en outre l'étape d'appliquer un couple, dit couple d'agrément, sur une courte période après un relâchement d'une pédale d'accélération.

Selon une mise en oeuvre, le couple d'agrément est appliqué pendant quelques millisecondes dans un mode de fonctionnement débouclé de la structure couple.

Selon une mise en oeuvre, le couple de consigne est déterminé à partir du régime moteur, d'un rapport de boîte de vitesses engagé, et d'une position d'une pédale d'accélération actionnée par un conducteur.

L'invention a également pour objet un véhicule automobile caractérisé en ce qu'il est équipé d'un calculateur moteur mettant en oeuvre le procédé de gestion d'un couple d'un moteur thermique à allumage commandé selon l'invention.

L'invention sera mieux comprise à la lecture de la description qui suit et à l'examen des figures qui l'accompagnent. Ces figures ne sont données qu'à titre illustratif mais nullement limitatif de l'invention.
La figure 1, déjà décrite, montre une représentation graphique du couple réalisé par le moteur thermique en fonction de l'avance à l'allumage;
La figure 2 montre une représentation schématique des modules appartenant à une structure couple d'un moteur thermique selon l'invention;
La figure 3 montre des représentations graphiques d'une variation du couple de consigne et d'un couple de pertes du moteur thermique ainsi que d'un signal booléen commandant le mode de fonctionnement de la structure couple lors de la mise en oeuvre du procédé selon l'invention;
La figure 4 montre un diagramme des étapes du procédé selon l'invention de gestion du couple moteur lors d'une décélération accompagnée d'une coupure d'injection;
La figure 5 représente une fonction hystérésis mise en oeuvre par le procédé selon l'invention pour détecter une période de coupure d'injection du moteur thermique.

Les éléments identiques, similaires, ou analogues conservent la même référence d'une figure à l'autre.

La figure 2 présente une structure couple 1 assurant une gestion de la commande en couple d'un moteur thermique à allumage commandé, fonctionnant par exemple à l'essence. Cette structure 1 comporte un module 2 d'interprétation de la volonté du conducteur. Ce module 2 est apte à déterminer le couple de consigne Cc à partir du régime moteur Wm, d'un rapport de boîte de vitesses R engagé, et d'une position P de la pédale d'accélération actionnée par le conducteur afin de retranscrire la volonté d'accélération du conducteur.

Un module 3 transforme le couple de consigne Cc en un couple indiqué Ci en tenant compte les pertes du moteur. Ainsi, le couple indiqué Ci est égal à la somme du couple effectif Ce issu d'un filtrage du couple de consigne Cc et d'un couple Cf de pertes moteur déterminé par le module 31: Ci=Ce+Cf. Le couple Cf de pertes moteur est le couple nécessaire au moteur pour faire avancer le véhicule prenant notamment en compte les frottements moteur ainsi que les pertes liées aux accessoires, tels que l'alternateur.

Le module 4 assure en coopération avec le module 41 la gestion du bouclage de la structure couple 1 contrôlant le pilotage du moteur. Ainsi, dans un mode de fonctionnement bouclé, l'avance à l'allumage AA est égale à l'avance à l'allumage optimale AO de sorte que le moteur suit le couple optimal CAO. A cet effet, un couple Cb issu du module 4 est envoyé au moteur puis converti en une commande des différents organes consistant notamment en une quantité de carburant à injecter dans les chambres de combustion du moteur thermique et un instant d'allumage des bougies.

Cependant, pour des besoins d'agrément ou de réserve de couple de freinage par exemple, la priorité est donnée au respect du couple conducteur. Dans ce cas la structure couple 1 passe dans un mode de fonctionnement débouclé dans lequel l'avance à l'allumage AA varie entre l'avance minimal Amin et l'avance maximal Amax afin de réaliser le couple de consigne Cc. Un signal Sb par exemple de type booléen est envoyé au moteur pour distinguer les différents modes de fonctionnement. Ainsi, un niveau zéro du signal Sb pourra par exemple correspondre au mode de fonctionnement bouclé de la structure couple 1 tandis que un signal Sb de niveau 1 pourra par exemple correspondre au mode de fonctionnement débouclé de la structure couple 1.

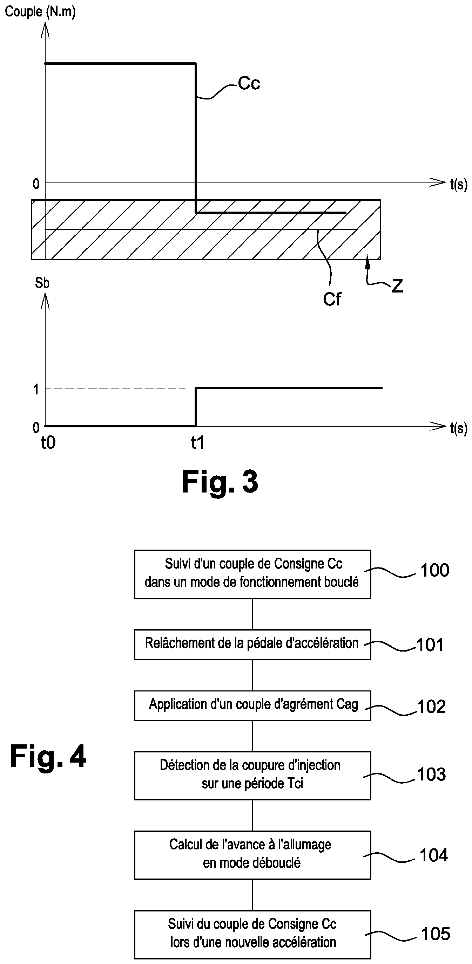

On décrit ci-après en référence avec les figures 3 et 4 une mise en oeuvre du procédé de gestion du couple moteur lors d'une décélération du véhicule avec coupure d'injection. La figure 3 montre des représentations graphiques en fonction du temps du couple de consigne Cc et du couple de pertes moteur Cf qui demeure sensiblement constant tout au long de la mise en oeuvre du procédé.

Entre les instants t0 et t1, le conducteur appuie dans une étape 100 sur la pédale d'accélération en sorte que couple le couple de consigne Cc est constant et supérieur au couple nul. Le moteur fonctionne alors sur son avance à l'allumage optimale AO lors du suivi du couple de consigne Cc dans un mode de fonctionnement bouclé de la structure couple 1. Le module 4 émet alors un signal Sb de niveau 0.

A l'instant t1, le conducteur relâche la pédale d'accélération dans une étape 101. Un couple, dit couple d'agrément Cag, est alors appliqué dans une étape 102 pendant quelques millisecondes, par exemple pendant une période de l'ordre de 135ms. Lors de l'application du couple d'agrément Cag, la structure couple 1 est dans un mode de fonctionnement débouclé. Le couple de consigne Cc diminue fortement et tend à rejoindre le couple de pertes moteur Cf.

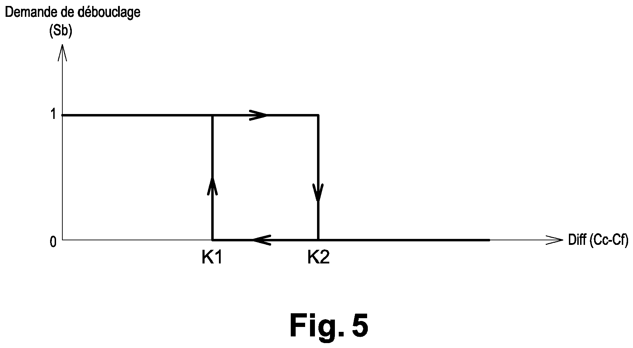

Pour détecter ensuite la coupure de l'injection du moteur dans une étape 103, le couple de consigne Cc est comparé avec le couple de pertes moteur Cf à l'aide d'une fonction hystérésis. Cette fonction hystérésis montrée la figure 5 correspond à la zone hachurée Z sur la figure 3.

Plus précisément, la structure couple 1 détecte un début de la période de coupure d'injection Tci et passe dans un mode de fonctionnement débouclé (le signal Sb passe à 1) lorsque la différence entre le couple de consigne Cc et le couple Cf de pertes moteur devient inférieure à une première valeur seuil K1 qui vaut en l'occurrence 5N.m. La structure couple 1 détecte une fin de la période de coupure d'injection Tci et repasse dans le mode de fonctionnement bouclé lorsque la différence entre le couple de consigne Cc et le couple Cf de pertes moteur devient supérieur à une deuxième valeur seuil K2 qui vaut en l'occurrence 8N.m. Bien entendu, les valeurs seuil K1 et K2 pourront varier en fonction de l'application. Ces valeurs seuil K1 et K2 pourront également dépendre du régime Wm du moteur thermique.

Au cours de la période de coupure d'injection Tci, la structure couple 1 fonctionne donc en mode débouclé (signal Sb à 1) de sorte que les avances à l'allumage AA calculées dans une étape 104 sont comprises entre les avances à l'allumage minimale Amin et maximale Amax.

Ainsi, il sera possible de réaliser un faible couple de consigne Cc lors de la réinjection qui se produira suite à une accélération ultérieure de la part du conducteur (cf. étape 105). La structure couple 1 étant déjà dans un mode de fonctionnement débouclé suite à l'application du couple d'agrément Cag, il n'y a pas de variation de l'avance à l'allumage AA due à cette nouvelle demande de débouclage.

Bien entendu, l'homme du métier pourra apporter des modifications aux paramètres du procédé de gestion du couple moteur précédemment décrit sans sortir du cadre défini par les revendications. En particulier, la durée d'application du couple d'agrément Cag et les valeurs seuil K1 et K2 pourront varier en fonction de l'application.

## Revendications

1. Procédé de gestion d'un couple d'un moteur thermique à allumage commandé par une structure couple (1), le moteur thermique fonctionnant (100) sur une avance à l'allumage optimale (AO) lors d'un suivi d'un couple de consigne (Cc) dans un mode de fonctionnement bouclé de la structure de couple (1), il comporte :
- l'étape de passer la structure couple (1) dans un mode de fonctionnement débouclé suite à une détection (103) d'une décélération avec une coupure d'injection du moteur thermique de sorte que des avances à l'allumage (AA) calculées (104) pendant une période de coupure d'injection (Tci) sont comprises entre des avances à l'allumage minimale (Amin) et maximale (Amax),
**caractérisé en ce qu'**il comprend :
- l'étape d'effectuer une comparaison (103) entre le couple de consigne (Cc) et un couple (Cf) de pertes moteur au moyen d'une fonction hystérésis pour détecter la période de coupure d'injection (Tci).

2. Procédé selon la revendication 1, **caractérisé en ce que** la structure couple (1) détecte un début de la période de coupure d'injection (Tci) et passe dans le mode de fonctionnement débouclé lorsque la différence entre le couple de consigne (Cc) et le couple de pertes moteur (Cf) devient inférieure à une première valeur seuil (K1).

3. Procédé selon la revendication 1 ou 2, **caractérisé en ce que** la structure couple (1) détecte une fin de la période de coupure d'injection (Tci) et passe dans le mode de fonctionnement bouclé lorsque la différence entre le couple de consigne (Cc) et le couple de pertes moteur (Cf) devient supérieure à une deuxième valeur seuil (K2).

4. Procédé selon les revendications 2 et 3, **caractérisé en ce que** la première (K1) et la deuxième (K2) valeur seuil valent respectivement 5 N.m et 8 N.m.

5. Procédé selon les revendications 2 et 3, **caractérisé en ce que** les valeurs seuil (K1, K2) de la fonction hystérésis dépendent d'un régime (Wm) du moteur thermique.

6. Procédé selon l'une des revendications 1 à 5, **caractérisé en ce qu'**il comporte en outre l'étape d'appliquer (102) un couple (Cag), dit couple d'agrément, sur une courte période après un relâchement (101) d'une pédale d'accélération.

7. Procédé selon la revendication 6, **caractérisé en ce que** le couple d'agrément (Cag) est appliqué pendant quelques millisecondes dans un mode de fonctionnement débouclé de la structure couple (1).

8. Procédé selon l'une des revendications 1 à 7, **caractérisé en ce que** le couple de consigne (Cc) est déterminé à partir du régime moteur (Wm), d'un rapport de boîte de vitesses (R) engagé, et d'une position (P) d'une pédale d'accélération actionnée par un conducteur.

9. Véhicule automobile **caractérisé en ce qu'**il est équipé d'un calculateur moteur mettant en oeuvre le procédé de gestion d'un couple d'un moteur thermique à allumage commandé selon l'une des revendications précédentes.

## Patentansprüche

1. Verfahren zur Handhabung eines Drehmoments einer Brennkraftmaschine mit Zündung, die durch eine Drehmomentstruktur (1) gesteuert ist, wobei die Brennkraftmaschine (100) mit einem optimalen Zündvoreilwinkel (AO) bei einem Mitverfolgen eines Solldrehmoments (Cc) in einem verschleiften Betriebsmodus der Drehmomentstruktur (1) funktioniert, das Folgendes umfasst:
- den Schritt des Überführens der Drehmomentstruktur (1) in einen nicht verschleiften Betriebsmodus im Anschluss an ein Erfassen (103) einer Verlangsamung mit einer Einspritzunterbrechung der Brennkraftmaschine derart, dass die Zündvoreilwinkel (AA), die während einer Einspritzunterbrechungsperiode (Tci) berechnet werden (104), zwischen dem minimalen Zündvoreilwinkel (Amin) und dem maximalen Zündvoreilwinkel (Amax) liegen,
**dadurch gekennzeichnet, dass** es Folgendes umfasst:
- den Schritt des Ausführens eines Vergleichs (103) zwischen dem Solldrehmoment (Cc) und einem Motorverlustedrehmoment (Cf) mittels einer Hysteresefunktion, um die Einspritzunterbrechungsperiode (Tci) zu erfassen.

2. Verfahren nach Anspruch 1, **dadurch gekennzeichnet, dass** die Drehmomentstruktur (1) einen Anfang der Einspritzunterbrechungsperiode (Tci) erfasst und auf den unverschleiften Betriebsmodus übergeht, wenn der Unterschied zwischen dem Solldrehmoment (Cc) und dem Motorverlustedrehmoment (Cf) niedriger wird als ein erster Schwellenwert (K1).

3. Verfahren nach Anspruch 1 oder 2, **dadurch gekennzeichnet, dass** die Drehmomentstruktur (1) ein Ende der Einspritzunterbrechungsperiode (Tci) erfasst und auf den verschleiften Betriebsmodus übergeht, wenn der Unterschied zwischen dem Solldrehmoment (Cc) und dem Motorverlustedrehmoment (Cf) größer wird als ein zweiter Schwellenwert (K2).

4. Verfahren nach den Ansprüchen 2 und 3, **dadurch gekennzeichnet, dass** der erste (K1) und der zweite (K2) Schwellenwert jeweils 5 N.m und 8 N.m betragen.

5. Verfahren nach den Ansprüchen 2 und 3, **dadurch gekennzeichnet, dass** die Schwellenwerte (Kl, K2) der Hysteresefunktion von einer Drehzahl (Wm) der Brennkraftmaschine abhängen.

6. Verfahren nach einem der Ansprüche 1 bis 5, **dadurch gekennzeichnet, dass** es außerdem den Schritt des Anwendens (102) eines sogenannten Komfortdrehmoments (Cag) auf einer kurzen Periode nach dem Freigeben (101) eines Gaspedals umfasst.

7. Verfahren nach Anspruch 6, **dadurch gekennzeichnet, dass** das Komfortdrehmoment (Cag) während einiger Millisekunden bei einem unverschleiften Betriebsmodus der Drehmomentstruktur (1) angewandt wird.

8. Verfahren nach einem der Ansprüche 1 bis 7, **dadurch gekennzeichnet, dass** das Solldrehmoment (Cc) ausgehend von der Motordrehzahl (Wm), einem eingelegten Schaltgetriebegang (R) und einer Position (P) eines Gaspedals, das von einem Fahrer betätigt wird, bestimmt wird.

9. Kraftfahrzeug, **dadurch gekennzeichnet, dass** es mit einem Motorrechner ausgestattet ist, der das Handhabungsverfahren eines Drehmoments einer Brennkraftmaschine mit gesteuerter Zündung nach einem der vorhergehenden Ansprüche umsetzt.

## Claims

1. A method for managing a torque of a controlled-ignition internal combustion engine using a torque structure (1), the internal combustion engine operating (100) on an optimal ignition advance (AO) when following a reference torque (Cc) in a looped back mode of operation of the torque structure (1), it comprises:
- the step of switching the torque structure (1) into a non-looped mode of operation following a detection (103) of a deceleration with the injection to the internal combustion engine cut off so that the ignition advances (AA) calculated (104) during a period for which the injection is cut off (Tci) are comprised between minimum (Amin) and maximum (Amax) ignition advances,
**characterized in that** it includes:
- the step of carrying out a comparison (103) between the reference torque (Cc) and a torque (Cf) of engine losses by means of a hysteresis function for detecting the injection cut-off period (Tci).

2. The method according to Claim 1, **characterized in that** the torque structure (1) detects a start of the injection cut-off period (Tci) and passes into the non-looped mode of operation when the difference between the reference torque (Cc) and the torque of engine losses (Cf) becomes less than a first threshold value (K1).

3. The method according to Claim 1 or 2, **characterized in that** the torque structure (1) detects an end of the injection cut-off period (Tci) and passes into the looped-back mode of operation when the difference between the reference toque (Cc) and the torque of engine losses (Cf) becomes greater than a second threshold value (K2).

4. The method according to Claims 2 and 3, **characterized in that** the first threshold value (K1) and the second threshold value (K2) are respectively 5 N.m and 8 N.m.

5. The method according to Claims 2 and 3, **characterized in that** the threshold values (Kl, K2) of the hysteresis function depend on a speed (Wm) of the internal combustion engine.

6. The method according to one of Claims 1 to 5, **characterized in that** it further comprises the step of applying (102) a torque (Cag), designated smoothing torque, over a short period after a release (101) of an accelerator pedal.

7. The method according to Claim 6, **characterized in that** the smoothing torque (Cag) is applied during a few milliseconds in a non-looped mode of operation of the torque structure (1).

8. The method according to one of Claims 1 to 7, **characterized in that** the reference torque (Cc) is determined from the engine speed (Wm), from an engaged gear ratio (R), and from a position (P) of an accelerator pedal actuated by a driver.

9. A motor vehicle, **characterized in that** it is equipped with an engine computer implementing the method for managing a torque of a controlled-ignition internal combustion engine according to one of the preceding claims.
